**Europäisches Patentamt**

**European Patent Office**

**Office européen des brevets**

(19)

(11) Veröffentlichungsnummer: **0 006 898**
**B1**

(12) # EUROPÄISCHE PATENTSCHRIFT

(45) Veröffentlichungstag der Patentschrift: **29.04.81**

(21) Anmeldenummer: **78900096.5**

(22) Anmeldetag: **26.07.78**

(86) Internationale Anmeldenummer:
**PCT/DE78/00014**

(87) Internationale Veröffentlichungsnummer:
**WO 79/00114 08.03.79 Gazette 79/5**

(51) Int. Cl.³: **F 16 K 11/06**

(54) **VENTIL.**

(30) Priorität: **31.08.77 DE 2739154**

(43) Veröffentlichungstag der Anmeldung:
**23.01.80 Patentblatt 80/2**

(45) Bekanntmachung des Hinweises auf die Patenterteilung:
**29.04.81 Patentblatt 81/17**

(84) Benannte Vertragsstaaten:
**FR GB SE**

(56) Entgegenhaltungen:
**DE - A - 2 606 952**
**US - A - 4 008 732**

(73) Patentinhaber: **FRIEDRICH GROHE ARMATURENFABRIK GmbH & CO**
**Hauptstrasse 137**
**D-5870 Hemer (DE)**

(72) Erfinder: **BERNAT, Georg**
**Grüner Weg 48**
**D-5750 Menden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Ventil

Die Erfindung betrifft ein Ventil gemäß dem Oberbegriff des Anspruchs 1.

Ventile dieser Gattung sind bekannt und werden hauptsächlich als Mengen- und/oder Mischregulierventile eingesetzt. Derartige Ventile erreichen, insbesondere wenn die aufeinander verschiebbar gelagerten Platten aus einem Oxidkeramikmaterial hergestellt sind, eine sehr lange Lebensdauer. Bei der Anordnung dieser Ventilplatten in dem Ventil zeigen sich jedoch Schwierigkeiten, da es, um eine sichere Abdichtung zu erzielen, erforderlich ist, die beiden Platten mit einer gewissen Vorspannung aufeinander zu pressen. Hierbei wirkt sich nachteilig aus, daß für jedes Element, insbesondere bei einer kostengünstigen Fertigung, die vorgegebenen Maße nur innerhalb gewisser Toleranzen eingehalten werden können.

Der Erfindung liegt daher die Aufgabe zugrunde, ein Ventil zu schaffen, bei dem die Platten, unabhängig von ihren Maßabweichungen, in der erforderlichen Art kostengünstig eingelagert werden können und darüber hinaus das Ventil so auszubilden, daß es in einfacher Weise in einer Armatur oder sonstigen Einrichtung an den Zu- und Abflußöffnungen gedichtet befestigt werden kann sowie ein Verfahren zur Herstellung dieses Ventils zu benennen.

Diese Aufgabe wird erfindungsgemäß durch die im kennzeichnenden Teil des Anspruchs 1 bzw. des Anspruchs 10 angegebenen Merkmale gelöst. Weitere Merkmale der Erfindung sind in den Unteransprüchen angegeben.

Durch diese Ausbildung wird in verblüffend einfacher Weise erreicht, daß das Ventil aus wenigen, einfach herzustellenden Teilen zusammengesetzt werden kann. Das aus den Ventilplatten mit den zugehörigen Dicht- und Gleitelementen bestehende Paket kann in ökonomisch äußerst günstiger Weise mit relativ großen Fertigungstoleranzen hergestellt werden, was insbesondere bei Verwendung von Ventilplatten aus äußerst hartem und verschleißfestem Oxidkeramikwerkstoff von großem Vorteil ist.

Der Zusammenbau des Ventils kann von wenig qualifiziertem Hilfspersonal mit wenigen Handgriffen ausgeführt werden. Der Einpaß- und Verschweißvorgang erfolgt in Bruchteilen einer Minute.

Auch ist es in einer bevorzugten Ausführungsform nach dem unlösbaren Zusammenfügen der beiden Halbschalen möglich, ohne das Gehäuse zu zerstören, das Paket durch eine Stirnöffnung herauszuziehen, zu prüfen, warten, oder reinigen und danach das Paket wieder in das Gehäuse einzuführen.

Ein Ausführungsbeispiel der Erfindung ist anhand eines Eingriffmischventils dargestellt. Es zeigt

Figur 1 das Mischventil in Seitenansicht teilweise geschnitten;

Figur 2 einen Schnitt auf der Linie A—B der Figur 1;

Figur 3 einen Teile der Verspundung der das Gehäuse bildenden beiden Halbschalen in vergrößerter Darstellung;

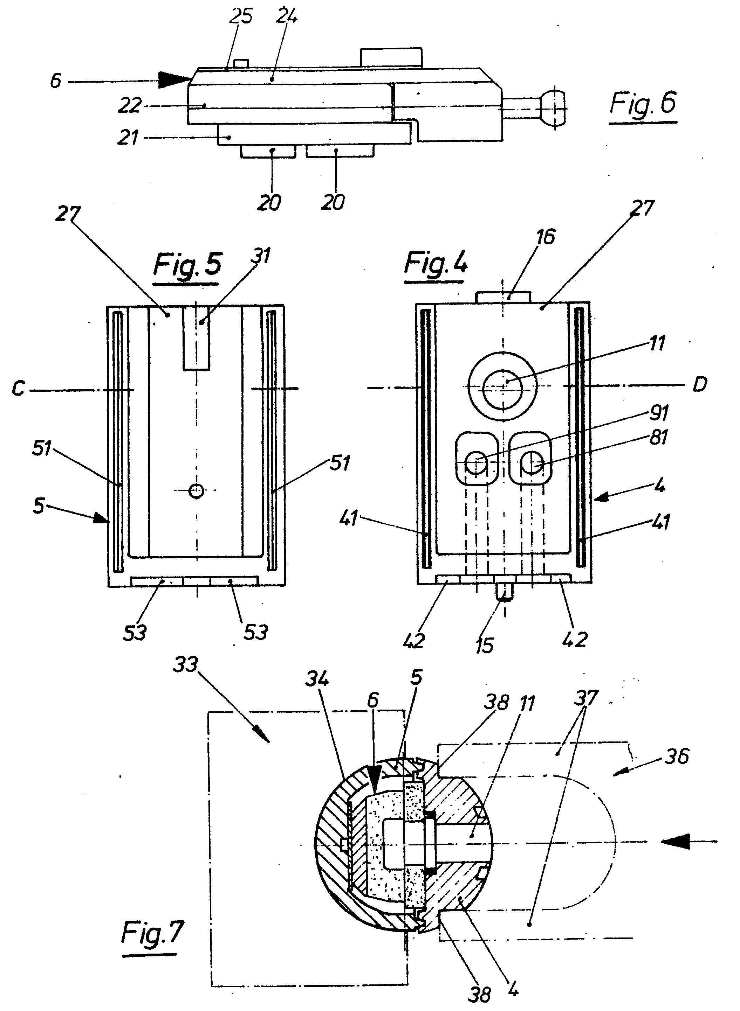

Figur 4 eine Halbschale mit den Zu- und Ablauföffnungen;

Figur 5 die zweite Halbschale;

Figur 6 ein Ventilplattenpaket;

Figur 7 das Ventil vor der endgültigen Zusammenfügen im Gesenk, wobei die Halbschale auf der Ebene C—D der Figuren 4 und 5 geschnitten sind.

In dem Körper einer Armatur 1 ist in einer Sackbohrung 2 ein Ventil 3 zur Steuerung des Mischungsverhältnisses und der Ausflußmenge angeordnet. Das Ventil wird im wesentlichen von zwei Halbschalen 4, 5 sowie einem in den Halbschalen mit Vorspannung eingebetteten, teilweise zueinander verschiebbaren Paket 6 von Ventilplatten gebildet.

Das aus den beiden Halbschalen 4 und 5 geformte Gehäuse 7 ist in etwa zylindrisch ausgebildet. In der einen Halbschale 4 sind an der unteren Stirnseite Zulauföffnungen 8, 9 für das warme und kalte Wasser vorgesehen und stellen die Verbindung mit Hilfe von Dichtringen 10 zwischen der Zuleitung 80, 90 der Armatur und den Wasserführungen 81, 91 in dem Ventil 3 her. Das Mischwasser tritt durch eine radiale Öffnung 11 an der Mantelfläche der Halbschale 4, abgedichtet durch einen Dichtring 12, in einen Auslauf 13 der Armatur 1 aus. Zur sicheren und dichten Halterung des Ventils 3 ist einerseits im Grund der Sackbohrung 2 eine Paßbohrung 14 vorgesehen, in die ein an der Stirnseite der Halbschale 4 angeformter Zapfen 15 eingerastet ist, und andererseits an der gegenüberliegenden Stirnseite eine am Rand vorstehende Nase 16 mit innerer kegeliger Mantelfläche ausgebildet, an die eine in ein Gewinde 17 der Sackbohrung 2 einschraubbare Mutter 18 mit einer entsprechenden Kegelfläche zur Anlage gebracht ist.

Das Paket 6 ist in einer Höhlung 19 des Gehäuses 7 mit Vorspannung eingebettet und besteht aus einer Zu- und Abflußöffnungen aufweisenden, an der Halbschale 4 mit Dichtelementen abgedichteten und unbeweglich fixierten Platte 21 aus geglätteter Oxidkeramik, an der eine zweite, ebenfalls aus Oxidkeramik bestehende Platte 22 mit einem Überströmkanal 23 anliegt. Die Platte 22 ist im Gegensatz zur Platte 21 mit einem Gleitelement 24 verschiebbar gehaltert, welches auf einer in der Halbschale 5 fixierten Gleitplatte 25 gleitet.

An dem Gleitelement 24 ist einstückig ein Ventilstellglied 26 angeformt, welches durch eine Öffnung 27 in der Stirnseite des Gehäuses 7 hindurchgeführt ist und eine Aufnahme für einen Betätigungshebel 28 hat. Der Betätigungshebel 28 ist in einem um die Mittelachse drehbaren Armaturenkopfstück 30 auf- und abbewegbar gelagert. Durch die Auf- und Abbewegung wird das Ventilstellglied 26 und mit ihm die bewegliche Platte 22 parallel zur Mittelachse 29 bewegt, so daß hiermit eine Regulierung der ausfließenden Wassermenge erfolgt. Außerdem ist das Ventilstellglied mit einem Führungszapfen in einer Radialnute 35 im Armaturenkopfstück 30 geführt und mit einem einen Drehpunkt 32 bildenden Zapfen quer zur Mittelachse 29 in einer Schlitzöffnung 31 gelagert, so daß bei einem Verschwenken des Betätigungshebels 28 und damit einer Drehung des Armaturenkopfstückes 30 das Ventilstellglied 26 eine Auslenkung über die Radialnute 35 erfährt. Hierdurch wird die bewegliche Ventilplatte 22 um den Drehpunkt 32 zur feststehenden Platte 21 verschwenkt, so daß der Durchströmquerschnitt der einen Zuflußöffnung sich verringert und der der zweiten sich vergrößert, d.h. das Mischungsverhältnis bzw. die Temperatur des austretenden Mischwassers wird geändert, die Ausflußmenge bleibt aber in etwa unverändert.

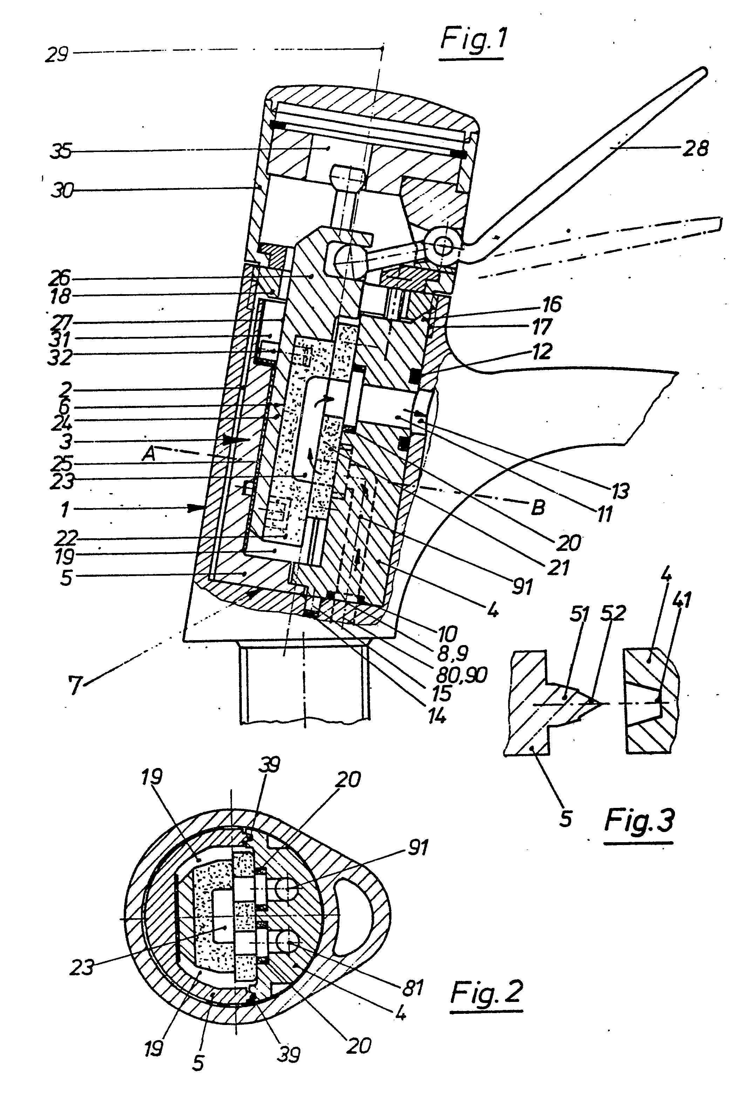

Das aus zwei Halbschalen 4 und 5 bestehende, das Paket 6 aufnehmende Gehäuse 7, ist mittels einer Verspundung, wie insbesondere aus Figur 3 zu erkennen ist, zusammengefügt. Hierbei ist die Halbschale 4 im Bereich der Berührungsflächen 39 mit zwei parallel zur Mantelfläche verlaufenden, leicht trapezförmig ausgebildeten Nuten 41 versehen. Entsprechend zu den Nuten ist an der zweiten Halbschale 5 ein Spund 51 ausgebildet, wobei zusätzlich an den Spunden eine im Querschnitt etwa einem gleichseitigen Dreieck entsprechende Spitze 52 angeformt ist.

Die Montage des Ventils erfolgt in der Weise, daß zunächst das Paket 6 lose in die Höhlung 19 eingelegt wird und danach die beiden Halbschalen 4, 5 mit ihrer Verspundung ineinander geschoben werden. Damit die beiden Halbschalen axial zueinander in der richtigen Lage fixiert werden können, ist an der unteren Stirnfläche der Halbschale 5 ein Anschlag 53 ausgebildet, der in einen Querschlitz 42 der Halbschale 4 einfaßt. Das lose zusammengefügte Ventil 3 wird nunmehr in ein Untergesenk 33 eingelegt, wobei die Halbschale 5 mit ihrer zylindrischen Mantelfläche von einer halbrund ausgebildeten Mulde 34 aufgenommen wird. Die im Bereich der Verspundung liegende Berührungsfläche 39 der beiden Halbschalen ist dabei so ausgebildet, daß sie etwa um den Betrag von 5—10% des Durchmessers parallel zur Gesenkebene herausragt. Hiernach wird das Obergesenk 36 mit seinem jochartig ausgebildeten Teil 37 auf die Halbschale 4 abgesenkt und gelangt in parallel zu den Berührungsflächen 39 ausgebildeten rinnenartigen Ausschnitten 38 zur Anlage. Nunmehr erfolgt von einem mit dem Obergesenk 36 gekoppelten Ultraschallgenerator, verbunden mit einer Zusammenpreßkraft, eine Ultraschallbeschwingung von ca. 20—40 kHz, wobei der Werkstoff an den Berührungsflächen 39, insbesondere im Bereich der Spitze 52 am Spund 51, sich erwärmt und abschmilzt. Dieser Vorgang wird so lange durchgeführt bis die Höhlung 19 im Gehäuse 7 in ihrer Dicke so weit verringert ist, bis das Paket 6 mit einer gewünschten Vorspannung im Gehäuse eingebettet ist. Danach wird die Beschwingung abgeschaltet und eine unlösbare Verschweißung in dieser Lage erfolgt unmittelbar.

Die Bemessung der Halbschale 5 ist dabei vorzugsweise so ausgelegt, daß innerhalb der Fertigungstoleranzen maximal eine genau zylindrische Ausbildung des Gehäuses 7 erzielt wird, d.h. im Regelfall ist die Halbschale 5 nach dem Verschweißvorgang etwas kleiner, wie insbesondere aus den Figuren 1 und 2 zu entnehmen ist. Hierdurch ist sichergestellt, daß das Ventil leicht in die Sackbohrung 2 eingeschoben und gesichert werden kann. Die Abdichtung der Zu- und Abläufe erfolgt dabei an der Halbschale 4 mit den besonderen vorstehend erläuterten Mitteln. Darüber hinaus gewährleistet das Spiel zwischen der Wandung der Sackbohrung 2 und der zylindrischen Mantelfläche der Halbschale 5 ein leichtes und einfaches Montieren und Demontieren des Ventils 3 in der Armatur nach einem langen Gebrauchszeitraum.

**Patentansprüche**

1. Ventil, insbesondere für das Sanitärfach, mit zwei aufeinander liegenden, ebenen und geglätteten, in einem Gehäuse (7) zueinander verschiebbar gehaltenen Platten (21, 22) als Ventilorgan, wobei die Platten eine oder mehrer Durchtrittsöffnungen für ein oder mehrere Medien aufweisen, dadurch gekennzeichnet, daß die beiden Platten (21, 22) mit zugehörigen Dicht- und Gleitelementen zu einem Paket (6) zusammengefaßt sind und das Paket in einem aus zwei Halbschalen (4, 5) gebildeten, Öffnungen für ein Ventilstellglied und den Zu- und Ablauf aufweisenden, in eine Zu- und Auslaufeinrichtung einfügbaren Gehäuse (7) mit einer Vorspannung gebettet ist, wobei die Berührungsflächen (39) der beiden Halbschalen der individuellen Dicke des Pakets durch Werkstoffverformung angepaßt und unlösbar miteinander verbunden sind.

2. Ventil nach Anspruch 1, dadurch gekennzeichnet, daß das Gehäuse (7) aus Kunststoff hergestellt ist und die beiden Halbschalen (4, 5) des Gehäuses (7) miteinander verschweißt sind.

3. Ventil nach den Ansprüchen 1 bis 2, dadurch gekennzeichnet, daß die beiden Halbschalen (4, 5) an ihren Berührungsflächen (39) durch Ultraschallbeschwingung verschweißt sind.

4. Ventil nach den Ansprüchen 1 bis 3, dadurch gekennzeichnet, daß im Bereich der Berührungsflächen (39) die Halbschalen gespundet sind, wobei vorzugsweise jeweils Spunde (51) der einen Halbschale (5) in jeweils im Querschnitt leicht trapezförmig ausgebildete Nuten (41) der anderen Halbschale (4) einfassen und an den Spunden zusätzlich jeweils im Querschnitt etwa einem gleichseitigen Dreieck entsprechende Spitzen (52) angeformt sind.

5. Ventil nach den Ansprüchen 1 bis 4, dadurch gekennzeichnet, daß das Paket (6) in einem etwa zylindrischen Gehäuse (7) parallel zur Mittelachse (29) eingebettet ist, wobei die Berührungsflächen (39) der beiden Halbschalen (4, 5) parallel der Mittelachse verlaufen.

6. Ventil nach Anspruch 5, dadurch gekennzeichnet, daß an der einen Stirnseite des Gehäuses (7) eine Öffnung (27) zur Herausführung und Anlenkung eines Ventilstellgliedes (26) vorgesehen ist.

7. Ventil nach den Ansprüchen 5 und 6, dadurch gekennzeichnet, daß in der einen Halbschale (4) des Gehäuses (7) die Zulauföffnungen (8, 9) für Warm- und Kaltwasser an der Stirnfläche, die Ablauföffnung (11) für das Mischwasser an der Mantelfläche ausgebildet ist.

8. Ventil nach Anspruch 7, dadurch gekennzeichnet, daß das Gehäuse (7) in eine Sackbohrung (2) einer Armatur (1) einführbar ist und Mittel zur Arretierung an der die Zu- und Ablauföffnungen tragende Halbschale (4) hat.

9. Ventil nach Anspruch 8, dadurch gekennzeichnet, daß an der einen Stirnseite der Halbschale (4) ein im Grund der Sackbohrung (2) einrastbarer Zapfen (15) und an der anderen Stirnseite eine am Rand vorstehende Nase (16) mit innerer kegeliger Mantelfläche angeformt sind und an der kegeligen Mantelfläche eine in ein Gewinde (17) in der Sackbohrung (2) einschraubbare Mutter (18) mit einer entsprechenden Kegelfläche anliegt.

10. Verfahren zur Herstellung eines Ventils nach den Ansprüchen 1 bis 9, dadurch gekennzeichnet, daß zunächst in die beiden das Gehäuse (7) bildenden Halbschalen (4, 5) das Paket (6) aus den Platten (21, 22) mit den zugehörigen Dicht- und Gleitelementen lose eingebettet wird und darauf die beiden Halbschalen (4, 5) mit ihrer Verspundung ineinander geschoben werden, daß danach das lose zusammengefügte Gehäuse (7) in ein feststehendes Untergesenk (33) gegeben wird, wobei die Berührungsflächen (39) der beiden Halbschalen (4, 5) parallel zur Gesenkebene liegen und anschließend ein mit einem Ultraschallgenerator gekoppeltes Obergesenk (36) auf die aus dem Untergesenk vorstehende Halbschale (4) geführt wird, damit die Berührungsflächen eine Ultraschallbeschwingung von ca. 20—40 kHz verbunden mit einer Zusammenpreßkraft erfahren, bis der Werkstoff an den Berührungsflächen der Halbschalen auf die individuelle Abmessung des Pakets abgeschmolzen ist, wonach die Beschwingung eingestellt wird, so daß die beiden Halbschalen in dieser Lage unlösbar verschweißen.

11. Verfahren nach Anspruch 10, dadurch gekennzeichnet, daß an der von dem Untergesenk (33) erfaßten Halbschale (5) Spunde (51) angeformt sind, deren Spitzen (52) in den Nuten (41) der vom Obergesenk (36) erfaßten Halbschale (4) bei der Beschwingung abschmelzen, wobei die Beschwingung mit dem Erreichen einer geforderten Vorspannung des Pakets (6) abgeschaltet wird und eine anschließende unlösbare Verschweißung erfolgt.

12. Verfahren nach den Ansprüchen 10 bis 11, dadurch gekennzeichnet, daß die eine Halbschale (5) vom Untergesenk in einer halbrunden zylindrischen Mulde (34) gehalten wird, wobei die Berührungsflächen (39) etwa um einen Betrag von 5 bis 10% des Durchmessers über die Mulde hinausragen, und die andere, die Zu- und Ablauföffnungen enthaltende Halbschale (4) an parallel zu den Berührungsflächen in der zylindrischen Mantelfläche ausgebildeten Ausschnitten (38) von einem jochartig ausgebildeten Teil (37) des Obergesenks (36) erfaßt wird.

**Revendications**

1. Vanne, en particulier pour installations sanitaires, comportant comme élément de vanne deux plaques (21, 22) planes et polies, disposées l'une sur l'autre et maintenues de manière déplaçable l'une par rapport à l'autre dans un boîtier (7), les plaques ayant une ou plusieurs ouvertures traversantes pour un ou plusieurs milieux, caractérisée en ce que les deux plaques (21, 22) sont combinées en un seul paquet (6) avec éléments d'étanchéité et de glissement appropriés et en ce que le paquet est logé avec une précontrainte dans un boîtier (7), formé de deux demi-coquilles (4, 5), présentant des ouvertures pour un organe de réglage de vanne et pour les arrivées et la sortie et pouvant être inséré dans un dispositif d'entrée et de sortie d'écoulement, les surfaces de contact (39) des deux demi-coquilles étant adaptées à l'épaisseur particulière du paquet par déformation du matériau et étant liées l'une à l'autre de manière inséparable.

2. Vanne selon la revendication 1, caractérisée en ce que le boîtier (7) est en matière plastique et en ce que les deux demi-coquilles (4, 5) du boîtier (7) sont soudées ensemble.

3. Vanne selon l'une des revendications 1 ou 2, caractérisée en ce que les deux demi-coquilles (4, 5) sont soudées par ultra-sons par leurs surfaces de contact (39).

4. Vanne selon l'une quelconque des revendications 1 à 3, caractérisée en ce que, dans la zone de leurs surfaces de contact (39), les demi-coquilles sont assemblées à rainure et languette, les languettes (51) d'une demi-coquille (5) rentrant de préférence dans des rainures (41) à section légèrement trapézoïdale de l'autre demi-coquille (4), et des extrémités (52) à section approximativement en triangle équilatéral étant aussi formées sur les languettes.

5. Vanne selon l'une quelconque des revendications 1 à 4, caractérisée en ce que le paquet (6) est logé parallèlement à l'axe central (29) dans un boîtier (7) approximativement cylindrique, les surfaces de contact (39) des deux demi-coquilles (4, 5) s'étendant parallèlement à cet axe central.

6. Vanne selon la revendication 5, caractérisée en ce qu'il est prévu, à une face d'extrémité du boîtier (7), une ouverture (27) pour faire sortir et guider un organe de réglage de vanne (26).

7. Vanne selon l'une des revendications 5 ou 6, caractérisée en ce que les ouvertures d'arrivée (8, 9) pour l'eau froide et l'eau chaude sont formées à la surface d'extrémité dans l'une des demi-coquilles (4) du boîtier (7) et en ce que l'ouverture de sortie (11) pour l'eau mélangée est formée à la surface latérale dans ladite demi-coquille (4).

8. Vanne selon la revendication 7, caractérisée en ce que le boîtier (7) peut être introduit dans un trou borgne (2) d'un accessoire (1) et a un moyen d'arrêt sur la demi-coquille (4) portant les ouvertures d'arrivée et de sortie.

9. Vanne selon la revendication 8, caractérisée en ce qu'un téton (15), engageable dans le fond du trou borgne (2), est formé à une surface d'extrémité de la demi-coquille (4) et un appendice (16), dépassant au bord et ayant une surface latérale interne conique, est formée à l'autre surface d'extrémité et en ce qu'un écrou (18), pouvant être vissé dans un filet (17) dans le trou borgne (2), repose sur la surface latérale conique avec une surface conique correspondante.

10. Procédé pour la fabrication d'une vanne selon l'une quelconque des revendications 1 à 9, caractérisé en ce que d'abord le paquet (6), composé des plaques (21, 22) avec les éléments d'étanchéité et de glissement appropriés, est logé de manière non serrée dans les deux demi-coquilles (4, 5) formant le boîtier (7), puis les deux demi-coquilles (4, 5) avec leurs rainures et languettes sont poussées l'une dans l'autre, en ce qu'ensuite le boîtier (7) assemblé de manière non serrée est introduit dans une matrice inférieure fixe (33), les surfaces de contact (39) des deux demi-coquilles (4, 5) étant parallèles au plan de la matrice, et en ce qu'ensuite une matrice supérieure (36) couplée à un générateur d'ultra-sons est amenée sur la demi-coquille (4) dépassant de la matrice inférieure, grâce à quoi les surfaces de contact sont soumises à une vibration ultra-sonore d'environ vingt à quarante kilohertz associée à une force de pression d'assemblage, jusqu'à ce que le matériau à la surface de contact des demi-coquilles soit fondu aux dimensions particulières du paquet, après quoi la vibration est arrêtée de sorte que les deux demi-coquilles sont soudées de manière inséparable dans cette position.

11. Procédé selon la revendication 10, caractérisé en ce que, sur la demi-coquille (5) saisie par la matrice inférieure (33), sont formées des languettes (51) dont les extrémités (52) fondent, pendant l'application de la vibration, dans les rainures (41) de la demi-coquille (4) saisie par la matrice supérieure (36), l'application de la vibration étant arrêtée lorsqu'une précontrainte donnée du paquet (6) est atteinte et un soudage subséquent inséparable s'ensuivant.

12. Procédé selon l'une des revendications 10 ou 11, caractérisé en ce que l'une des demi-coquilles (5) est maintenue par la matrice inférieure dans un moule (34) cylindrique semi-circulaire, les surfaces de contact (39) dépassant du moule d'une quantité égale environ à cinq à dix pour cent du diamètre, et en ce que l'autre demi-coquille (4) contenant les ouvertures d'arrivée et de sortie est saisie, par une partie (37) en forme d'arche de la matrice supérieure (36), en des encoches (38) formées parallèlement aux surfaces de contact dans la surface latérale cylindrique.

**Claims**

1. Valve, especially for plumbing, with two plane and smoothed plates (21, 22) lying against one another mutually displaceably held in a housing (7) as the valve part, the plates having one or more passage openings for one or more media characterised in that the two plates (21, 22) are combined with associated sealing and sliding elements into a package (6) and the package is embedded with a pre-stressing in a housing (7) having openings for a valve control element and the inlet and outlet formed from two half-shells (4, 5), insertable in an intake and discharge device, the contact surfaces (39) of the two half-shells being conformed to the individual thickness of the package by deformation of the material and undetachably joined to one another.

2. Valve according to claim 1, characterised in that the housing (7) is made of plastics material and the two half-shells (4, 5) of the housing (7) are welded together.

3. Valve according to claims 1 to 2, characterised in that the two half-shells (4, 5) are welded at their contact surfaces (39) by ultrasonic vibration.

4. Valve according to claims 1 to 3 characterised in that the half-shells are grooved and tongued in the region of the contact surfaces (39), preferably, tongues (51) of one half-shell (5) engaging in respective grooves (41) of slightly trapezoidal cross-section of the other half-shell (4) and in addition points (52) of cross-section corresponding approximately to an equilateral triangle being formed on the tongues in each case.

5. Valve according to claims 1 to 4, characterised in that the package (6) is embedded within an approximately cylindrical housing (7) parallel to the central axis (29), the contact surfaces (39) of the two half-shells (4, 5) running parallel to the central axis.

6. Valve according to claim 5, characterised in that an opening (27) is provided on one of the front faces of the housing (7) for the leading-out and pivoting of a valve control element.

7. Valve according to claims 5 and 6, characterised in that in one of the half-shells (4) of the housing (7) the outlet opening (11) for the mixed water on the casing is formed as the inlet openings (8, 9) for hot and cold water on the front face.

8. Valve according to claim 7, characterised in that the housing (7) is insertable within a hollowed-out pocket (2) of a fitting (1) and has means for locking on to the half-shell (4) carrying the inlet and outlet openings.

9. Valve according to claim 8, characterised in that on one front face of the half-shell (4) a peg engageable in the bottom of the hollowed-out pocket (2) and on the other front face a projection (16) with a conical internal surface projecting at the edge are formed and a nut (18) with a corresponding conical surface screwable into a thread (17) within the hollowed-out pocket (2) abuts against the conical surface.

10. Method of manufacture of a valve according to claims 1 to 9, characterised in that the package (6) of the plates (21, 22) with the associated sealing and sliding elements is first loosely embedded within the half-shells (4, 5) forming the housing (7), and then the two half-shells (4, 5) with their groove and tongueing are pushed into one another, that thereafter the loosely joined together housing (7) is put into a fixed lower die, the contact surfaces (39) of the two half-shells lying parallel to the plane of the die and subsequently an upper die (36) coupled to an ultrasonic generator is guided on to the half-shell (4) projecting out of the lower die, the contact surfaces experiencing thereby an ultrasonic vibration of around 20—40 kHz combined with a compression force until the material at the contact surfaces has fused on to the individual dimension of the package, whereafter the vibration is adjusted so that the half-shells are undetachably welded in this position.

11. Method according to claim 10, characterised in that tongues (51) on the half-shell (5) gripped by the lower die (33) fuse into the grooves (41) of the half-shell (4) gripped by the upper die (36), the vibration being switched off when a required pre-stressing is attained and a subsequent undetachable weld takes place.

12. Method according to claims 10 to 11, characterised in that one half-shell (5) of the lower die is held in a semi-circular cylindrical mould (34), the contact surfaces (30) projecting beyond the mould by an amount approximately of 5 to 10% of the diameter and the other half-shell (4) contacting the inlet and outlet openings being gripped by a yoke-like formed part (37) of the upper die (36) at cut-outs (38) in the cylindrical casing formed parallel to the contact surfaces.

0 006 898

Fig.1

Fig.2

Fig.3

0 006 898

Fig. 6

Fig. 5

Fig. 4

Fig. 7

2